# DEMANDE DE BREVET EUROPEEN

(11) **EP 3 028 870 A1**
(43) Date de publication de la demande: **08.06.2016**
(21) Numéro de dépôt: 14196177.1
(22) Date de dépôt: 04.12.2014
(51) Int. Cl.: B60B 3/04, B60B 33/00, B62B 3/14

(54) **Organe de roulement améliore**

(71) Demandeur: Hebeco Société Anonyme, 68000 Colmar (FR)
(72) Inventeur: Dedieu, Stéphane, 67370 DINGSHEIM (FR); Kempf, Firmin, 67600 EBERSHEIM (FR)
(74) Mandataire: Cabinet Netter

(57) **Abrégé**

Organe de roulement comprenant une bande de roulement (4), un palier (6) et une chape (8) pour fixation à un dispositif de port de charge, le palier (6) comprenant une pièce intérieure (16) et une pièce extérieure (14) sensiblement montées à rotation l'une sur l'autre, la bande de roulement (4) étant reçue sur la pièce extérieure (14).

L'organe de roulement comprend en outre au moins deux éléments de liaison (10) fixant ensemble la pièce intérieure (16) à la chape (8), et les éléments de liaison (10) sont disposés à distance de l'axe de rotation du palier (6).

## Description

L'invention concerne les organes de roulement pour les dispositifs de port de charge, comme un chariot de transport ou de supermarché, ou un lit médical.

De très nombreux types de roues sont connus pour les dispositifs de port de charge. D'une manière générale, ces roues sont fixées au dispositif de port de charge au moyen d'un ensemble tige/alésage ou d'une platine de fixation. Cette fixation est elle-même reliée à un axe de roue, qui est disposé au centre de la roue.

Dans le cas des chariots de supermarché, il est courant que la fixation soit portée par une chape de fixation qui porte l'axe de roue. Cette chape est en métal, et peut également porter un frein permettant de bloquer le chariot lors du transport par un travelator.

Ces organes de roulement sont massifs, peu esthétiques, et potentiellement dangereux en cas de choc avec un usager. De plus, ils sont construits d'une manière qui limite les possibilités de maintenance, de sorte qu'il est plus courant de changer une roue dont le palier est défectueux que de la réparer.

L'invention vient améliorer la situation.

À cet effet, l'invention propose un organe de roulement comprenant une bande de roulement, un palier et une chape pour fixation à un dispositif de port de charge, le palier comprenant une pièce intérieure et une pièce extérieure sensiblement montées à rotation l'une sur l'autre, la bande de roulement étant reçue sur la pièce extérieure. L'organe de roulement comprend en outre au moins deux éléments de liaison fixant ensemble la pièce intérieure à la chape, et les éléments de liaison sont disposés à distance de l'axe de rotation du palier.

Cet organe de roulement est avantageux car il permet de mieux répartir les axiales comme radiales, et permet d'utiliser de nouveaux matériaux.

Selon diverses variantes, l'organe de roulement selon l'invention peut présenter les caractéristiques suivantes :
- la pièce intérieure et la pièce extérieure sont sensiblement annulaires, les éléments de liaison étant reçus à travers la pièce intérieure,
- la pièce intérieure comprend deux parties sensiblement symétriques,
- la chape est réalisée en matière plastique,
- la chape comprend un patin monobloc avec celle-ci,
- le patin est réalisé par excroissance de la chape,
- la chape et le patin sont réalisés en deux matières plastiques distinctes,
- la partie intérieure comprend un patin monobloc avec celle-ci,
- l'organe de roulement comprend trois éléments de liaison formant deux à deux un angle d'environ 120° avec l'axe de rotation du palier,
- les éléments de liaison sont des rivets,
- le palier reçoit un roulement annulaire disposé entre la pièce intérieure et la pièce extérieure,
- le palier comprend une pluralité de billes reçues dans un ou plusieurs logements définis par la pièce intérieure et la pièce extérieure,
- le palier comprend au moins deux galets disposés autour d'une portion de la pièce intérieure -au niveau des éléments de liaison, et recevant une extrémité -de la pièce extérieure.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 montre une vue en perspective d'un organe de roulement selon un premier mode de réalisation de l'invention,
- la figure 2 représente une vue de dessus de l'organe de roulement de la figure 1,
- la figure 3 représente une vue de côté selon l'axe III-III de la figure 1 de l'organe de roulement,
- la figure 4 représente une vue en coupe selon l'axe IV-IV de la figure 2,
- la figure 5 représente une vue de côté selon l'axe III-III d'un élément de la figure 4,
- la figure 6 représente une vue en coupe selon la ligne VI-VI de la figure 5,
- la figure 7 représente un organe de roulement selon un deuxième mode de réalisation de l'invention,
- la figure 8 représente une vue en coupe selon l'axe VIII-VIII de la figure 7,
- la figure 9 représente un organe de roulement selon un troisième mode de réalisation de l'invention, et
- la figure 10 représente une vue en coupe selon le plan X-X de la figure 9.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

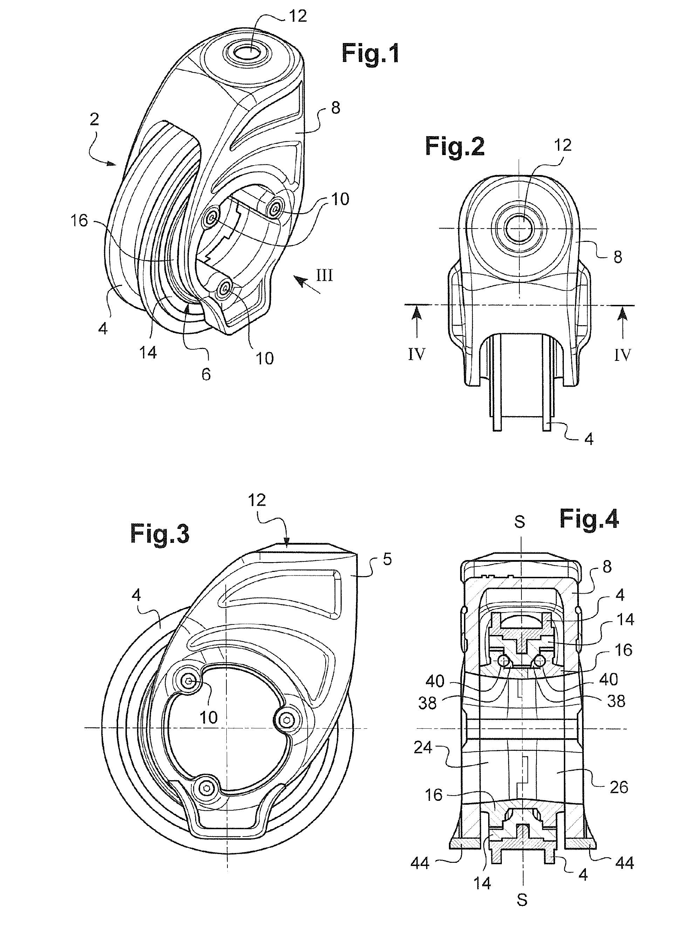

La figure 1 montre une vue en perspective d'un organe de roulement selon un premier mode de réalisation de l'invention.

L'organe de roulement 2 est dans l'exemple décrit ici une roue pour dispositif de port de charges, comme un chariot de transport ou de supermarché, ou un lit médical.

L'organe de roulement 2 est une roue pour travelator comprenant une bande de roulement 4, un palier 6, une chape 8, des éléments de liaison 10 et un élément d'attache 12.

Le palier 6 comprend une pièce extérieure 14 et une pièce intérieure 16 qui sont montées à rotation l'une sur l'autre. La pièce extérieure 14 reçoit la bande de roulement 4, et les éléments de liaison 10 fixent ensemble la chape 8 et le palier 6 à travers la pièce intérieure 16.

La figure 2 montre une vue de dessus de l'organe de roulement 2 de la figure 1. Comme on peut le voir sur cette figure, L'élément d'attache 12 est dans l'exemple décrit ici un logement propre à recevoir une tige de fixation d'un dispositif de port de charges. Cette vue permet également d'apprécier la particularité des bandes de roulement adaptées aux travelator : la bande de roulement 4 présente une section en « U », dont les branches viennent se loger dans les rainures du sol de travelator.

La figure 3 montre une vue de côté selon l'axe III-III de la figure 1, qui définit un axe passant par le centre de rotation de l'organe de roulement 2. Cette vue permet d'observer les éléments de liaison 10. Les éléments de liaison 10 sont répartis angulairement de manière sensiblement régulière. Ainsi, comme il y a trois éléments de liaison 10, ceux-ci sont répartis à 120° les uns des autres par rapport au centre de rotation de l'organe de roulement 2 (marqué par le croisement de deux axes sur la figure 3). En variante, il peut y avoir deux éléments de liaison 10 ou plus de trois éléments. Dans l'exemple décrit ici, les éléments de liaison 10 sont des rivets qui traversent des trous respectifs de la pièce intérieure 16 du palier 6 et de la chape 8.

La figure 4 représente une vue en coupe de l'organe de roulement 2 selon l'axe IV-IV de la figure 2. Comme on peut le voir sur cette figure, la bande de roulement 4, la pièce extérieure 14 et la pièce intérieure 16 sont des pièces généralement de révolution, plus particulièrement ces éléments sont de forme annulaire. En outre, dans l'exemple décrit ici, la bande de roulement 4, le palier 6 et la chape 8 présentent une symétrie selon un plan orthogonal au plan de la figure 4 et comprenant l'axe S-S représenté sur cette même figure. Ainsi, la pièce intérieure 16 est réalisée en deux parties sensiblement identiques 24 et 26.

La partie 26 est représentée en vue de côté selon l'axe III-III de la figure 1. Comme on peut le voir sur cette figure, la partie 26 a une forme généralement annulaire, avec une portion extérieure 28 et une portion intérieure 30.

La portion extérieure 28 présente une pluralité de logements 32, chacun propre à recevoir une bille. Dans l'exemple décrit ici, les logements 32 sont réalisés sous la forme d'évidements hémisphériques, reliés entre eux par une surface sensiblement plane de la portion extérieure 28. En variante, la portion extérieure 28 pourrait présenter une rainure périphérique propre à recevoir une pluralité de billes.

La portion intérieure 30 présente trois bourrelets 34 saillant vers l'intérieur de l'anneau. Chaque bourrelet 34 présente une ouverture traversante 36 agencée pour recevoir un des éléments de liaison 10. D'une manière générale, il y a autant de bourrelets 34 et d'ouvertures traversantes 36 qu'il y a d'éléments de liaison 10.

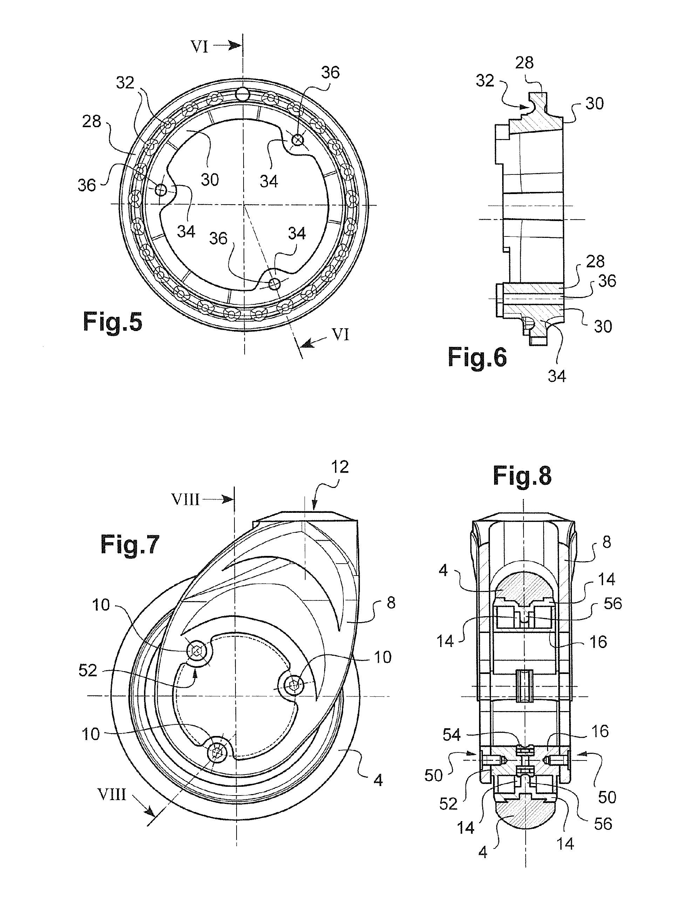

La figure 6 représente une vue en coupe de la partie 26 selon la ligne VI-VI de la figure 5. Comme on peut le voir sur la figure 5, la ligne VI-VI traverse la partie 26 radialement au niveau d'un logement 32 d'une part, et radialement au niveau d'un bourrelet 34 d'autre part. La figure 6 permet de montrer que la portion extérieure 28 présente une surface sensiblement uniformément cylindrique, tandis que la portion intérieure 30 présente une surface sensiblement tronconique, sauf au niveau des bourrelets 34. Cette surface tronconique facilite l'évacuation des saletés, et permet d'éviter la stagnation d'eau éventuelle en cas de pluie lorsque les dispositifs de port de charge sont stockés à l'extérieur.

La pièce extérieure 14 présente une section de forme générale en « V », dont les branches présentent chacune un renfoncement présentant une forme semblable à celle des logements 32. Ainsi, lorsque la pièce extérieure 14 et la pièce intérieure 16 sont couplées, elles définissent une pluralité de logements 38 qui logent chacun une bille 40. Comme les parties 24 et 26 sont identiques, il y a donc deux chemins de billes sensiblement parallèles qui sont définis par l'association des parties extérieure 14 et intérieure 16.

Comme la pièce intérieure 16 est réalisée en deux parties, l'assemblage de l'organe de roulement 2 est particulièrement aisé. Ainsi une des deux parties 24 et 26 est mise à plat, et les billes du premier chemin de billes disposées dans les logements 32. Ensuite, l'ensemble est recouvert par la bande de roulement 4 reçue sur la pièce extérieure 14. Enfin, l'opération est répétée de la même manière avec l'autre partie qui est mise à plat et qui reçoit les billes du second chemin de billes.

Du fait des billes 40 reçues dans les logements 38, lorsqu'un effort de translation est transmis à la partie intérieure 16 par les éléments de liaison 10, la partie extérieure 14 et la bande de roulement 4 viennent tourner autour de la partie intérieure 16, autour de l'axe III-III, à cause du frottement de la bande de roulement 4 contre le sol d'une part, et de la rotation relative de la partie extérieure 14 et de la partie intérieure 16 sur les deux chemins de billes d'autre part.

Ainsi, l'organe de roulement 2 peut être dit « sans moyeu », ou « à moyeu creux », puisque le palier, classiquement placé à proximité du centre de rotation de l'organe de roulement et de l'élément liant la bande de roulement à la chape, est ici excentré. Il en résulte l'utilisation de plusieurs éléments de liaison 10, qui permettent de mieux répartir les contraintes, axiales comme radiales.

Dans l'exemple décrit ici, la chape 8 présente une forme générale en « U », dont les deux branches sont évidées pour correspondre à l'évidement du palier 6, et qui présentent des ouvertures venant en correspondances des ouvertures 36 pour recevoir les éléments de liaison 10.

La conception nouvelle de l'organe de roulement 2 a permis d'utiliser de nouveaux matériaux pour réaliser la chape 8. Ainsi, celle-ci est intégralement réalisée en matériau plastique, dont la résistance est compatible avec les efforts transmis. En d'autres termes, à efforts constants, la conception de l'organe de roulement 2 permet d'utiliser des matériaux pour réaliser la chape 8 qui n'étaient pas compatibles précédemment Dans l'exemple décrit ici, le matériau est choisi dans la famille des polyamides. En variante, d'autres matériaux plastiques pourraient être envisagés. En variante, la chape 8 peut être réalisée dans un matériau métallique.

À l'extrémité des branches du U, la chape 8 présente des patins 44. Les patins 44 ont pour fonction de venir frotter contre le sol du travelator. Ainsi, les patins 44 sont dans un matériau moins rigide que celui du reste de la chape 8, mais la chape 8 reste un élément monobloc pouvant être réalisé par moulage par injection. En variante, les patins 44 pourraient être réalisés dans le même matériau que le reste de la chape 8, ou être en matériau métallique.

La figure 7 représente une vue semblable à la vue de la figure 3 d'un organe de roulement 2 selon un deuxième mode de réalisation de l'invention. Dans ce mode de réalisation, l'organe de roulement 2 n'est plus spécifiquement conçu pour un travelator, et est une roue pour dispositif de port de charges, comme un chariot de transport ou de supermarché, ou un lit médical classiques.

Ainsi, la bande de roulement 4 ne présente plus une section en « U » comme c'était le cas sur les figures 1 à 6, et présente une section générale hémicylindrique, tout en restant reçue dans la pièce extérieure 14, qui est inchangée. Comme l'organe de roulement 2 est une roue classique, la chape 8 est allégée, et ne présente plus de patins 44. En variante, la section générale peut être sensiblement rectangulaire, avec des coins rayonnés.

Dans ce mode de réalisation, le palier 6 n'est plus réalisé au moyen de deux chemins de billes entre les pièces extérieure 14 et intérieure 16, mais au moyen de galets qui sont logés au même niveau que les éléments de liaison 10.

La figure 8, qui est une vue en coupe selon la ligne VIII-VIII de la figure 7, permet de mieux comprendre ce mode de réalisation.

Comme on peut le voir sur cette figure, la pièce intérieure 16 est de forme générale annulaire à section en « U ». Cette section en U est particulièrement visible dans la partie supérieure de la figure 8. La pièce 14 présente six trous 50 borgnes pour la réception des éléments de liaison 10. Les trous 50 sont alignés par paire, de sorte que les six trous définissent trois axes de liaison, de manière semblable au premier mode de réalisation. Il serait également possible d'utiliser quatre trous pour réaliser 2 axes de liaison, ou plus de 3 paires de trous.

Au niveau de chaque paire de trous 50, la pièce 14 présente des bourrelets 52 semblables aux bourrelets 34 du premier mode de réalisation. Une différence réside dans le fait que les bourrelets 52 logent sensiblement en leur centre un galet 54 qui reçoit une extrémité 56 de la pièce extérieure 14.

Ainsi, l'organe de roulement 2 présente un palier 6 formé par la pièce extérieure 14 et la pièce intérieure 16, la pièce extérieure 14 étant montée à rotation par rapport à la pièce intérieure 16 par le biais des trois galets 54.

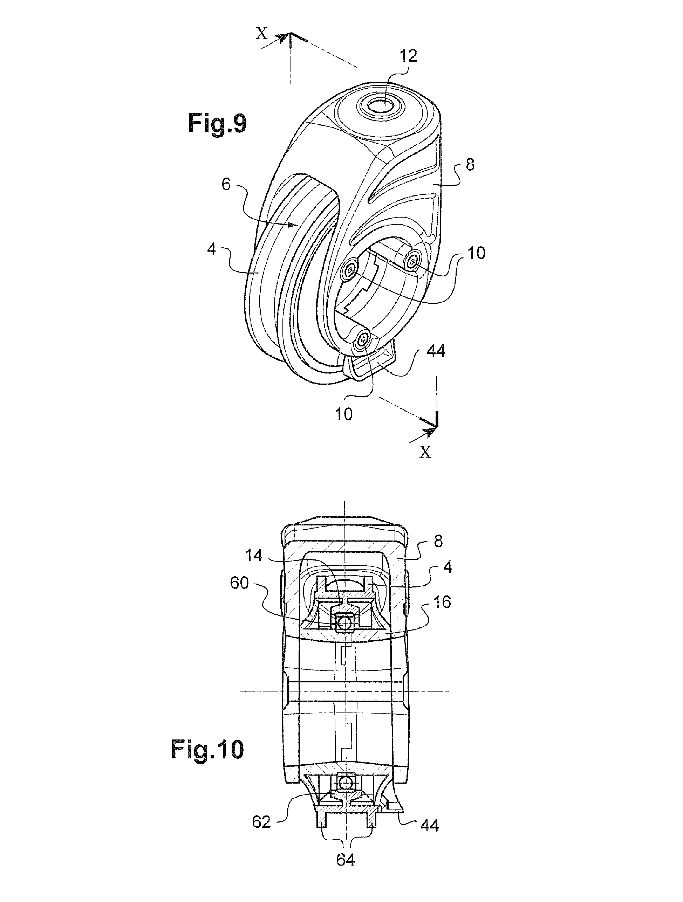

Les figures 9 et 10 représentent un troisième mode de réalisation d'un organe de roulement 2 selon l'invention. Dans cette variante, l'organe de roulement 2 est une roue pour travelator, mais les deux chemins de billes du mode de réalisation des figures 1 à 6 sont remplacés par un unique roulement à billes 60.

Pour cela, la bande de roulement 4 est légèrement modifiée pour présenter une section sensiblement en « X » à branches asymétriques, dont une paire de branches 62 formant pièce extérieure 14 est agencée pour recevoir le roulement 60, et dont l'autre paire de branches 64 forme la bande de roulement de travelator classique.

Pour sa part, la pièce intérieure 16 reçoit le roulement 60 et présente une forme générale annulaire avec une section en « U » dont les branches sont inclinées l'une vers l'autre, et viennent en appui sur la base des branches 64 de la bande de roulement 4.

Enfin, la pièce intérieure 16, réalisée en deux parties n'est pas entièrement symétrique. Le patin 44 n'est plus intégré à la chape, mais à la pièce intérieure 16, et l'organe de roulement 2 ne présente ici qu'un seul patin 44, qui est dans l'exemple décrit ici réalisé dans le même matériau que la pièce intérieure 16. Le patin 44 pourrait être un matériau moins rigide que celui du reste de la pièce intérieure 16, mais la pièce intérieure 16 reste un élément monobloc pouvant être réalisé par moulage par injection.

Il doit être compris que les exemples décrits ci-dessus peuvent être combinés entre eux. Ainsi, de manière non-exhaustive, l'organe de roulement des figures 7 et 8 pourrait être réalisé avec une bande de roulement et une chape adaptées à un travelator ; de même, l'organe de roulement des figures 1 à 6 pourrait être adapté avec une roue classique comme celle de l'organe de roulement des figures 7 et 8 ; la chape pourrait indifféremment être celles décrites avec l'un des modes de réalisation, pour autant qu'elle correspond à la destination à un travelator ou à un sol classique ; etc. De plus, dans ce qui précède, certains éléments sont présentés comme réalisés en deux parties. En variante, ces éléments pourraient être réalisés en une seule pièce.

## Revendications

1. Organe de roulement comprenant une bande de roulement (4), un palier (6) et une chape (8) pour fixation à un dispositif de port de charge, le palier (6) comprenant une pièce intérieure (16) et une pièce extérieure (14) sensiblement montées à rotation l'une sur l'autre, la bande de roulement (4) étant reçue sur la pièce extérieure (14), **caractérisé en ce qu'**il comprend en outre au moins deux éléments de liaison (10) fixant ensemble la pièce intérieure (16) à la chape (8), lesdits éléments de liaison (10) étant disposés à distance de l'axe de rotation du palier (6), et **en ce que** le palier (6) reçoit un roulement annulaire (60) disposé entre la pièce intérieure (16) et la pièce extérieure (14).

2. Organe de roulement selon la revendication 1, dans lequel la pièce intérieure (16) et la pièce extérieure (14) sont sensiblement annulaires, les éléments de liaison (10) étant reçus à travers la pièce intérieure (16).

3. Organe de roulement selon l'une des revendications précédentes, dans lequel la pièce intérieure (16) comprend deux parties (24, 26) sensiblement symétriques.

4. Organe de roulement selon l'une des revendications précédentes, dans lequel la chape (8) est réalisée en matière plastique.

5. Organe de roulement selon l'une des revendications précédentes, dans lequel la chape (8) comprend un patin (44) monobloc avec celle-ci.

6. Organe de roulement selon les revendications 4 et 5, **caractérisé en ce que** le patin (44) est réalisé par excroissance de la chape (8).

7. Organe de roulement selon les revendications 4 et 5 prises en combinaison, dans lequel la chape (8) et le patin (44) sont réalisés en deux matières plastiques distinctes

8. Organe de roulement selon l'une des revendications 1 à 4, dans lequel la partie intérieure (16) comprend un patin (44) monobloc avec celle-ci.

9. Organe de roulement selon l'une des revendications précédentes, comprenant trois éléments de liaison (10) formant deux à deux un angle d'environ 120° avec l'axe de rotation du palier (6).

10. Organe de roulement selon l'une des revendications précédentes, dans lequel les éléments de liaison (10) sont des rivets.
